(19) Europäisches Patentamt / European Patent Office / Office européen des brevets

(11) **EP 4 204 887 B1**

(12) **EUROPEAN PATENT SPECIFICATION**

(45) Date of publication and mention
of the grant of the patent:
**08.10.2025 Bulletin 2025/41**

(21) Application number: **20764752.0**

(22) Date of filing: **25.08.2020**

(51) International Patent Classification (IPC):
**G02B 21/00** *(2006.01)*     **G02B 21/02** *(2006.01)*
**G02B 21/18** *(2006.01)*     **G02B 21/24** *(2006.01)*
**G02B 21/36** *(2006.01)*

(52) Cooperative Patent Classification (CPC):
**G02B 21/004; G02B 21/0032; G02B 21/0044;
G02B 21/18; G02B 21/361; G02B 21/367**

(86) International application number:
**PCT/GB2020/052040**

(87) International publication number:
**WO 2022/043644 (03.03.2022 Gazette 2022/09)**

(54) **MICROSCOPE**

MIKROSKOP

MICROSCOPE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(43) Date of publication of application:
**05.07.2023 Bulletin 2023/27**

(73) Proprietor: **Aurox Limited
Oxford, Oxfordshire OX14 3DB (GB)**

(72) Inventors:
• **JUSKAITIS, Rimyvdas**
  **Oxford Oxfordshire OX14 3DB (GB)**
• **NEIL, Mark AA**
  **Oxford Oxfordshire OX14 3DB (GB)**

(74) Representative: **Murgitroyd & Company
165-169 Scotland Street
Glasgow G5 8PL (GB)**

(56) References cited:
**EP-A1- 1 580 586      EP-A1- 3 550 353
WO-A2-00/43819      JP-A- 2009 116 317**

**Description**

The present invention relates to an optical microscope. In particular, but not exclusively, the invention relations to a confocal optical microscope.

Many conventional optical microscopes include a plurality of objective lenses with different magnification powers. The objective lenses are mounted in a turret, which allows them to be positioned alternately in the optical path of the microscope, allowing a sample to be viewed at different magnifications. This allows a user to identify an area of interest at a relatively low magnification and then view that area of interest at a higher magnification.

However, conventional optical microscopes of the type described above do not enable the sample to be viewed simultaneously at both magnifications, since only one objective lens can be located in the optical path at a time. Nor do they allow rapid switching between the high and low magnification images, for example to provide quasi-simultaneous viewing at both magnifications. These represent technical problems with known optical microscopes.

A similar problem arises with confocal microscopes, where an image is generated by scanning a sample using a high magnification objective, but where a low magnification objective may also be provided for orientation and to locate areas of interest in a sample. Again both objectives cannot be used at the same time, and therefore a high magnification image and a low magnification image cannot be captured simultaneously or quasi-simultaneously. This also represents a technical problem with known confocal microscopes.

In some confocal microscopes, light from a light source is focused onto a single spot on the sample, and light emanating from that spot (for example, by reflection or fluorescence) is then collected by an objective lens and focused onto a detector. By scanning the sample and detecting variations in the intensity of light from the sample, an image of the sample can be constructed. However, real time imaging is not possible owing to the requirement to scan the sample.

In an alternative confocal system, for example as described in US6144489, a mask is provided for encoding light incident on the sample and decoding light emanating from a plurality of regions of the sample. This generates a confocal image of the sample simultaneously with a non-confocal image. By subtracting the non-confocal image from the confocal image, out of focus blur can be removed providing an improved confocal image. However, this confocal system again suffers from the technical problems identified above, specifically in that it cannot capture a high magnification image and a low magnification image simultaneously.

A similar confocal microscope system is described in US6687052.

EP 1 58 586 A1 discloses an optical-scanning examination apparatus, in which the resolution of acquired images can be changed and in which a fluorescence image intensity and examination depth can be adjusted.

EP 3 550 353 A1 discloses a microscope including a movable stage that supports a plurality of wells arranged in an array, a first imaging unit having a low-magnification objective lens, a second imaging unit having a high-magnification objective lens higher in magnification than the low-magnification objective lens, a computer configured to determine a representative position of each spheroid based on imaging data of the spheroid acquired by the first imaging unit, and a controller configured to cause respective imaging units and to sequentially acquire imaging data of the spheroid contained in each of the wells.

It is an object of the present invention to provide a microscope that overcomes or mitigates one or more of the aforesaid problems, or that provides a useful alternative thereto.

According to the present invention there is provided, a microscope comprising the features of claim 1.

The provision of such a microscope configuration enables a sample to be viewed simultaneously at both high and low magnifications and/or allows rapid switching between high and low magnification images, for example to provide quasi-simultaneous viewing at both magnifications.

The microscope further comprises a beam splitter mounted in the first and second light paths. The beam splitter comprises a spatial light modulator comprising a plurality of transmissive and non-transmissive portions.

For example, the beam splitter may be in the form of a rotatable mask comprising a plurality of transmissive and non-transmissive portions. Such a beam splitter enables the first and second light paths to be split as they pass to the detector. This can be useful in a number of applications where a portion of the light beams is required to be selected and processed to generate a desired image.

The non-transmissive portions of the spatial light modulator are reflective and the spatial light modulator is configured to split the first light path into a first transmitted light path and a first reflected light path, and to split the second light path into a second transmitted light path and a second reflected light path, where the first transmitted light path is congruent with the second reflected light path, and the first reflected light path is congruent with the second transmitted light path. The transmitted and reflected light paths can then be used to construct an image.

The detector includes a first detector portion and a second detector portion, wherein the first detector portion is configured to receive transmitted light and to generate transmitted image data, and the second detector portion is configured to receive reflected light and to generate reflected image data, or the second detector portion is configured to receive transmitted light and to generate transmitted image data, and the first detector portion is configured to receive reflected light and to generate reflected image data.

In one configuration the first detector portion is configured to receive light from the first transmitted light path or the congruent second reflected light path, and the second detector portion is configured to receive light from the second transmitted light path or the congruent first reflected light path. The microscope may then further comprise an image processor connected to receive image data from the detector and configured to subtract the reflected image data from the transmitted image data to produce confocal image data for one or both of the first objective and the second objective. Such a configuration can enable laser-free confocal microscopy including simultaneous, or quasi-simultaneous, high and low magnification imaging.

In such arrangements, the light source may comprise an LED light for example.

Furthermore, the light source can be configured to direct light through the beam splitter towards the sample stage, for illuminating a sample mounted on the sample stage through the first objective and/or the second objective. This arrangement can provide a confocal system which has a functionality similar to that described in US6144489.

The beam splitter can function as a mask for encoding light incident on the sample and decoding light emanating from a plurality of regions of the sample. This generates a confocal image of the sample simultaneously with a non-confocal image. By subtracting the non-confocal image from the confocal image, out of focus blur can be removed providing an improved confocal image. However, in contrast to US6144489, the presently described confocal system can capture a high magnification image and a low magnification image simultaneously and/or quasi-simultaneously.

The microscope may further comprise a shutter mechanism for switching between the first objective and the second objective. A user can thus view either a low magnification image or a high magnification image, without making any other changes to the optical configuration of the microscope. This makes it very simple for the user to switch between a low magnification image for orientation, and a high magnification image of a specific area of interest within the sample. Also, by switching the shutter mechanism rapidly, a pair of high and low magnification images can be captured substantially quasi-simultaneously.

The first objective can be movable along an optical z-axis relative to the sample stage and the microscope can further comprise a z-stack controller which is configured to drive the first objective along the optical z-axis and capture a series of images as the first objective is driven along an optical z-axis. Such z-stack controllers are known. What is different here is that the z-stack controller is configured to capture the series of images while the first objective is in motion without requiring the first objective to be stopped as the images are being captured. This enables the time period to be significantly reduced for capturing a z-stack of images. For example, in one configuration, components of the sample stage itself only move in the x - y plane relative to the optical z-axis so as to move the sample in the x - y plane. A camera is driven along the z-axis, thus achieving the z stack with a continuous drive of the camera in the z direction.

The sample stage itself may comprises a transparent base on which the sample can be mounted, and a glide-push mechanism for sliding the sample around on a top-surface of the transparent base. This configuration enables the desired x - y motion of the sample while maintaining the desired z-positioning for the sample. It also enables the sample to be viewed through both objectives on either side of the sample stage.

The microscope may also comprising an integrated data storage unit for storing image data. A large quantity of image data can be generated very quickly by microscopes as described herein. As such, it has been found to be advantageous to provide an integrated data storage unit for storing the image data. This data may then be processed within the microscope and/or transmitted to an external device (e.g. a computing device such as a laptop, desktop computer, tablet, or smart phone) for image processing and/or viewing.

Embodiments of the invention will now be described, by way of example, with reference to the accompanying drawings, in which:

> Figure 1 is a schematic diagram of a prior art confocal microscope apparatus, and
> Figure 2 is a schematic diagram of a first embodiment of a confocal microscope apparatus according to the present invention.

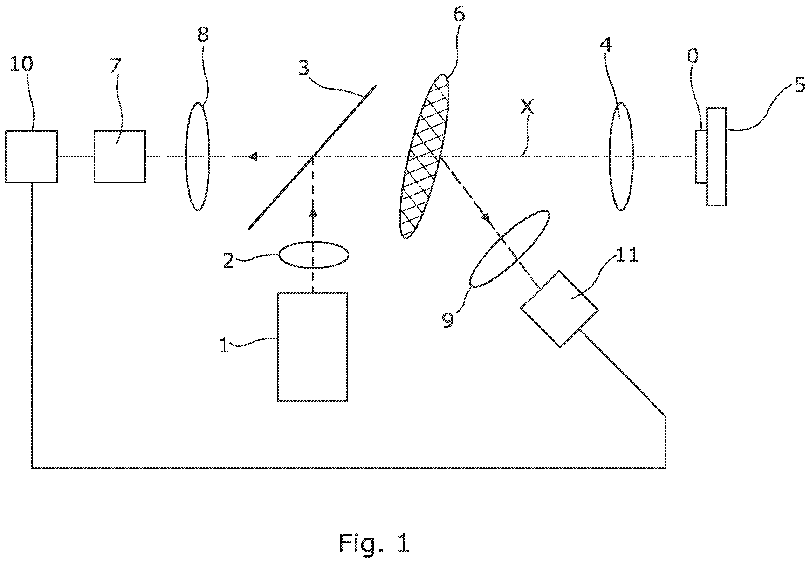

Figure 1 is a schematic diagram of a prior art confocal microscope apparatus as described in US6687052. The apparatus includes a light source 1 with an associated collimating lens 2, which directs light towards a beam splitter 3, for example a semi silvered mirror, a polarising beam splitter in combination with a quarter wave plate, or a dichroic beam splitter. Light is reflected from the beam splitter 3 through a mask 6 and a microscope objective lens 4 onto a sample O mounted on a sample stage 5.

The mask 6 comprises a spatial modulator that modulates the light passing from the source 1 to the sample O. Typically the mask modulates the intensity of the light passing through it, however, it can alternatively modulate the phase or polarisation of the light.

In an embodiment the mask 6 comprises a pattern of transmissive regions and opaque or reflective regions, which modulate the intensity of the light passing through the mask. The mask is configured to enable these transmissive and reflective regions to be moved around to adjust the pattern of illumination falling on the sample O. This can be achieved for example by providing the pattern of transmissive and reflective regions on a spinning disc. Alternatively, a spatial light modulator comprising an array of adjustable micromirrors may be used.

Light emitted from the sample O (for example by reflection or fluorescence) is captured by the objective lens 4 and focussed back onto the mask 6. The light that passes through the transmissive portions of the mask 6 then passes through the beam splitter 3 and is focussed by a lens 8 onto a first detector 7, for example a CCD detector. The first detector 7 captures a first of the sample O.

The mask 6 is set at a small angle (for example a few degrees) to the optical axis X of the objective lens 4. As a result, light reflected from the reflective portions of the mask is focussed by a lens 9 onto a second detector 11, which captures a second image of the sample.

The images captured by the first and second detectors 7, 11 are transmitted to an image processing device 10, which is configured to generate a composite image based on the images captured by the first and second detectors 7, 11.

In use, the light emanating from the sample O is focussed back by the microscope objective 4 onto the mask 6, which transmits only the light falling on the transmissive areas of the mask. The transmitted image is captured by the first detector 7. The image captured by the first detector 7, which is referred to herein as the positive image, comprises a combination of a conventional image $I_{conv}$ superimposed with a confocal image $I_{conf}$, where the confocal image $I_{conf}$ is produced from light emanating from the focal plane of the microscope objective 4.

At the same time, light emanating from other parts of the sample O, i.e. from other planes of the sample, is reflected by the reflective portions of the spatial pattern on the rear surface of the mask 6 and is focused onto the second detector 11. The second detector 11 thus captures a second image, referred to herein as the negative image, comprising a conventional image $I_{conv}$ minus the confocal image $I_{conf}$.

The positive and negative images captured by the first and second detectors 7, 11 are transmitted to the image analyser 10 which subtracts the negative image from the positive image, i.e.:

$$(I_{conv} + I_{conf}) - (I_{conv} - I_{conf}).$$

The resulting image is a confocal image from which the out of focus conventional image has been removed, as described in US6687052.

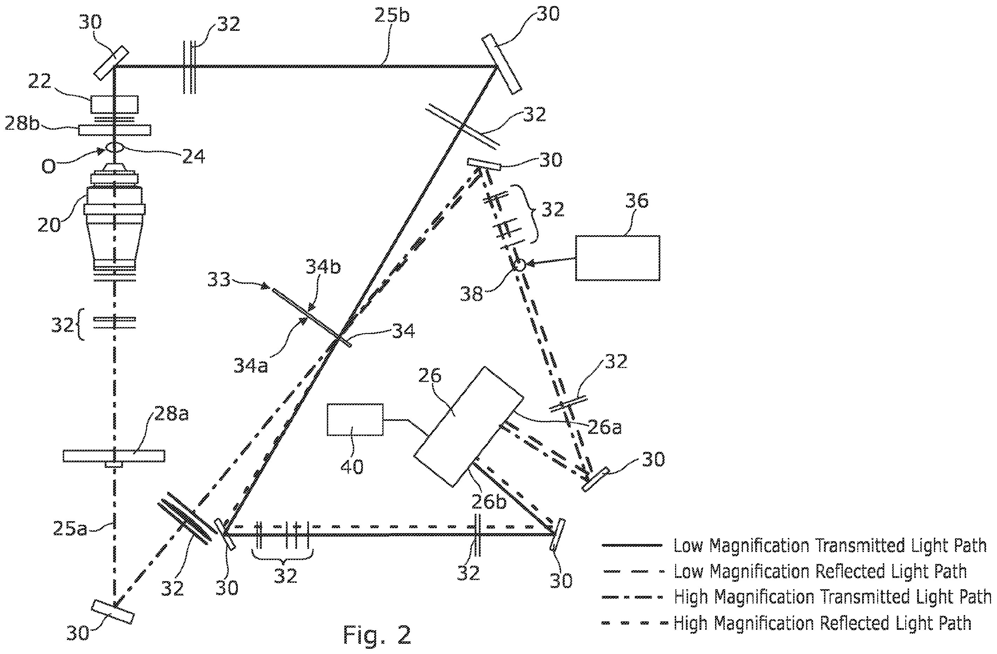

A confocal microscope according to an embodiment of the invention is shown in figure 2. As will be described in more detail below, the optical arrangement is broadly similar to that of the prior art confocal microscope shown in figure 1. However, in the present invention, two microscope objective lenses 20, 22 are provided, which are mounted on opposite sides of the sample holder 24, allowing two images of the sample to be captured simultaneously (or quasi-simultaneously), providing that the sample is at least partially transparent.

In one embodiment, the microscope objective lenses 20, 22 have different magnification powers, the first microscope objective lens 20 comprising a high magnification objective, and the second microscope objective lens 22 comprising a low magnification objective that provides a wide field of view.

In the embodiment shown in figure 2, a high magnification light path 25a from the high magnification objective 22 to a detector 26 is defined by a set of optical elements including, in this embodiment, a shutter 28a, mirrors 30, lenses 32 and a beam splitter 33 comprising a mask 34. In this embodiment the mask 34 comprises a spinning disc having a pattern of transmissive and reflective regions. However, other types of mask, for example a spatial light modulator, could also be used.

Similarly, a low magnification light path 25b from the low magnification objective 22 to the detector 26 is defined by a set of optical elements including in this embodiment a shutter 28b, mirrors 30, lenses 32 and the mask 34.

It should be noted that both the high magnification light path 25a and the low magnification light path 25b pass through the mask 34 between the respective objective lenses 20, 22 and the detector 26.

It should also be noted that the arrangement of mirrors 30 and lenses 32 shown in figure 2 is purely illustrative and is not intended to be limiting. In practice, the layout of these components may be altered significantly without altering the functional operation of the microscope.

The confocal microscope also includes a light source 36, which introduces a beam of light along either the high magnification light path 25a or the low magnification light path 25b, for example via a beam splitter 38. In this embodiment light from the light source 36 is introduced along the high magnification light path at a location between the detector 26 and the mask 34. The light source 26 may for example be a low coherence light source, such as a light emitting diode (LED), an incandescent lamp or an arc lamp, or a coherent light source such as a laser.

In use, light from the light source 36 passes through the mask 34 and is focussed by the high magnification objective 22 onto a focal plane within the sample O. As described previously in relation to the prior art microscope illustrated in figure 1, the light is encoded by the mask 34, creating a spatial pattern that is imaged onto the sample in the sample holder 24.

The encoded light emitted back from the sample O (for example, by reflection or fluorescence) is focussed by the high magnification objective 20 onto the mask 34, which transmits only the light that falls on the transmissive areas of the mask. The transmitted image is captured on a first portion 26a of the detector 26. This is the positive image, which comprises a conventional image $I_{conv}$ superimposed with a confocal image $I_{conf}$, where the confocal image $I_{conf}$ is produced from light emanating from the focal plane of the high magnification objective 20.

At the same time, light emanating from other parts of the sample O, i.e. not in the focal plane of the microscope objective 20, is reflected by the reflective portions of the spatial pattern of the mask 34 and is focussed onto a second portion 26b of the detector 26. The detector 26 thus captures a negative image comprising a conventional image $I_{conv}$ minus the confocal image $I_{conf}$.

The positive and negative images captured by the detector 26 are transmitted to an image analyser 40 which subtracts the negative image from the positive image, producing a high magnification confocal image from which the out of focus conventional image has been removed.

Alternatively, a low magnification confocal image can be captured by detecting light that passes through the low magnification objective 22 and along the low magnification light path 25b. To capture a low magnification image, the first shutter 28a in the high magnification light path 25a is closed and the second shutter 28b in the low magnification light path 25b is opened.

The sample O is illuminated with light reflected from the second side 34b of the mask 34. As previously stated the spatial pattern carried by the mask 34 comprises a plurality of transmissive and reflective portions. The light reflected form the second side 34b is therefore encoded by the reflective portions in a similar manner to the way in which the light transmitted through the mask 34 is encoded by the transmissive portions. The encoded light reflected from the mask is focused onto the sample O by the low magnification objective 22, forming an image of the spatial pattern in a focal plane within the sample O. Preferably, the focal plane of the low magnification objective 22 is co-planar with the focal plane of the high magnification objective 20, so that both objectives 20, 22 image the same plane within the sample O.

The light emanating from the sample is focussed by the low magnification objective 22 onto the mask 34, which transmits only the light that falls on the transmissive areas of the mask. The light that falls on the reflective portions of the mask is decoded by the spatial pattern of the mask. This light forms a low magnification positive image on the first portion 26a of the detector 26.

The light that is transmitted through the transmissive portions of the mask 34 is focussed on the second portion 26b of the detector, forming a negative low magnification image. The positive and negative low magnification images are transmitted to the image analyser 40, which subtracts the negative image from the positive image, forming a low magnification confocal image from which the out of focus conventional image has been removed.

It will be apparent that by opening the first and second shutters 28a, 28b consecutively, a user can view either a low magnification confocal image or a high magnification confocal image, without making any other changes to the optical configuration of the microscope. This makes it very simple for the user to switch between a low magnification confocal image for orientation, and a high magnification confocal image of a specific area of interest within the sample. Also, by switching the first and second shutters 28a, 28b rapidly and alternately between the open and closed configurations, a pair of high and low magnification images can be captured substantially quasi-simultaneously.

Although the embodiment described above relates to a confocal microscope, the invention is also applicable to non-confocal microscopes, where it allows two different images of a sample, such as high and low magnification images, to be captured simultaneously or quasi-simultaneously. This can be achieved by replacing the spatial modulator that forms the mask 34 with a beam splitter, for example a semi-silvered mirror.

In such an arrangement, light from the source 36 falls on the beam splitter that comprises the mask 34. Part of this light will be transmitted through the mask 34 and part will be reflected. The transmitted light will pass along the high magnification optical path to the high magnification objective 20, which will focus the light onto the sample O. Light emanating from the sample O will then be captured by the high magnification objective lens 20 and will pass through the mask 34 to be focussed onto the first part 26a of the detector 26, forming a high magnification image of the sample O. Note that any light reflected from the mask 34 is not captured and the first image is a conventional image rather than a confocal image.

Similarly, low magnification image can be captured using the low magnification objective 22. To capture a low magnification image the first shutter 28a is closed to block light travelling along the high magnification light path 25a, and the second shutter 28b is opened, allowing light to travel along the low magnification light path 25b. The light reflected from the mask 34 will pass along the low magnification optical path 25b to the low magnification objective 22, which focuses the light onto the sample O. Light emanating from the sample O will then be captured by the low magnification objective lens 22 and will pass through the mask 34 to be focussed onto the second part 26b of the detector 26, forming a low magnification image of the sample O. Again, this image is a conventional image rather than a confocal image.

The examples described herein are to be understood as illustrative examples of embodiments of the invention. Any feature described in relation tc any one example or embodiment may be used alone or in combination with other features. In addition, any feature described in relation to any one example or embodiment may also be used in combination with one or more features of any other of the examples or embodiments, or any combination of any other of the examples or embodiments.

## Claims

1. A microscope comprising:

    a sample stage (24) for mounting a sample (O);
    a light source (36) for illuminating the sample (O) when mounted on the sample stage (24);
    a detector (26);
    a first objective (20) disposed on one side of the sample stage (24);
    a second objective (22) disposed on an opposite side of the sample stage (24);
    a first set of optical elements (28a, 30, 32, 33, 34) defining a first light path (25a) from the first objective (20) to the detector (26);
    a second set of optical elements (28b, 30, 32, 33, 34) defining a second light path (25b) from the second objective (22) to the detector (26);
    wherein the first objective (20) and the second objective (22) have a common optical axis and are configured to image a sample (O) mounted on the sample stage (24) in a common focal plane,
    wherein the first objective (20) is a high magnification objective and the second objective (22) is a low magnification objective;
    the microscope further comprising:

        a beam splitter (33) mounted in the first (25a) and second (25b) light paths, wherein the beam splitter (33) comprises a spatial light modulator (34) comprising a plurality of transmissive and non-transmissive portions;
        wherein the non-transmissive portions of the spatial light modulator (34) are reflective,
        wherein the spatial light modulator (34) is configured to split the first light path (25a) into a first transmitted light path and a first reflected light path, and to split the second light path (25b) into a second transmitted light path and a second reflected light path, and
        wherein the first transmitted light path is congruent with the second reflected light path, and the first reflected light path is congruent with the second transmitted light path;
        wherein the detector (26) includes a first detector portion (26a) and a second detector portion (26b), wherein the first detector portion (26a) is configured to receive transmitted light and to generate transmitted image data, and the second detector portion (26b) is configured to receive reflected light and to generate reflected image data, or the second detector portion (26b) is configured to receive transmitted light and to generate transmitted image data, and the first detector portion (26a) is configured to receive reflected light and to generate reflected image data.

2. A microscope according to claim 1, wherein the spatial light modulator comprises a rotatable mask comprising a plurality of transmissive and non-transmissive portions.

3. A microscope according to any preceding claim, wherein the first detector portion (26a) is configured to receive light from the first transmitted light path or the congruent second reflected light path, and the second detector portion (26b) is configured to receive light from the second transmitted light path or the congruent first reflected light path.

4. A microscope according to any preceding claim, wherein the microscope further comprises an image processor (40) connected to receive image data from the detector (26) and configured to subtract the reflected image data from the transmitted image data to produce confocal image data for one or both of the first objective (20) and the second objective (22).

5. A microscope according to any preceding claim, further comprising a shutter mechanism (28a, 28b) for switching between the first objective (20) and the second objective (22).

6. A microscope according to any preceding claim, wherein the light source (36) is configured to direct light via the beam splitter (33, 34) towards the sample stage (24), for illuminating a sample (O) mounted on the sample stage (24) through the first objective (20) and/or the second objective (22).

7. A microscope according to claim 6, wherein light from the light source (36) passing through the beamsplitter (33, 34) is directed along the first light path (25a) to the sample via the first objective (20) and light from the light source (36) reflected by the beamsplitter (33, 34) is directed along the second light path (34b) to the sample (O) via the second objective (22).

8. A microscope according to any preceding claim, wherein the first objective (20) is movable along an optical z-axis relative to the sample stage (24) and the microscope comprises a z-stack controller which is configured to drive the first objective (20) along the optical z-axis and capture a series of images as the first objective (20) is driven along an optical z-axis, wherein the z-stack controller is configured to capture the series of images while the first objective (20) is in motion without requiring the first objective (20) to be stopped as the images are being captured.

9. A microscope according to any preceding claim, further comprising an integrated data storage unit for storing image data.

10. A microscope according to any preceding claim, wherein the sample stage (24) comprises a transparent base on which the sample (O) can be mounted, and an glide-push mechanism for sliding the sample (O) around on a top-surface of the transparent base.

**Patentansprüche**

1. Ein Mikroskop, das Folgendes beinhaltet:

einen Probentisch (24) zum Befestigen einer Probe (O);
eine Lichtquelle (36) zum Beleuchten der Probe (O), wenn sie auf dem Probentisch (24) befestigt ist;
einen Detektor (26);
ein erstes Objektiv (20), das auf einer Seite des Probentischs (24) angeordnet ist;
ein zweites Objektiv (22), das auf einer entgegengesetzten Seite des Probentischs (24) angeordnet ist;
einen ersten Satz optischer Elemente (28a, 30, 32, 33, 34), der einen ersten Lichtweg (25a) von dem ersten Objektiv (20) zu dem Detektor (26) definiert;
einen zweiten Satz optischer Elemente (28a, 30, 32, 33, 34), der einen zweiten Lichtweg (25b) von dem zweiten Objektiv (20) zu dem Detektor (26) definiert;
wobei das erste Objektiv (20) und das zweite Objektiv (22) eine gemeinsame optische Achse aufweisen und konfiguriert sind, um eine Probe (O), die auf dem Probentisch (24) befestigt ist, in einer gemeinsamen Fokalebene abzubilden,
wobei das erste Objektiv (20) ein Objektiv mit hoher Vergrößerung ist und das zweite Objektiv (22) ein Objektiv mit geringer Vergrößerung ist;
wobei das Mikroskop ferner Folgendes beinhaltet:

einen Strahlteiler (33), der in dem ersten (25a) und zweiten (25b) Lichtweg befestigt ist, wobei der Strahlteiler (33) einen räumlichen Lichtmodulator (34) beinhaltet, der eine Vielzahl von lichtdurchlässigen und nicht-lichtdurchlässigen Abschnitten beinhaltet;
wobei die nicht-lichtdurchlässigen Abschnitte des räumlichen Lichtmodulators (34) reflektierend sind,

wobei der räumliche Lichtmodulator (34) konfiguriert ist, um den ersten Lichtweg (25a) in einen ersten übertragenen Lichtweg und einen ersten reflektierten Lichtweg zu teilen und den zweiten Lichtweg (25b) in einen zweiten übertragenen Lichtweg und einen zweiten reflektierten Lichtweg zu teilen, und
wobei der erste übertragene Lichtweg mit dem zweiten reflektierten Lichtweg kongruent ist und der erste reflektierte Lichtweg mit dem zweiten übertragenen Lichtweg kongruent ist;
wobei der Detektor (26) einen ersten Detektorabschnitt (26a) und einen zweiten Detektorabschnitt (26b) umfasst, wobei der erste Detektorabschnitt (26a) konfiguriert ist, um übertragenes Licht zu empfangen und übertragene Bilddaten zu erzeugen, und der zweite Detektorabschnitt (26b) konfiguriert ist, um reflektiertes Licht zu empfangen und reflektierte Bilddaten zu erzeugen, oder der zweite Detektorabschnitt (26b) konfiguriert ist, um übertragenes Licht zu empfangen und übertragene Bilddaten zu erzeugen, und der erste Detektorabschnitt (26a) konfiguriert ist, um reflektiertes Licht zu empfangen und reflektierte Bilddaten zu erzeugen.

2. Mikroskop gemäß Anspruch 1,
wobei der räumliche Lichtmodulator eine drehbare Maske beinhaltet, die eine Vielzahl von lichtdurchlässigen und nicht-lichtdurchlässigen Abschnitten beinhaltet.

3. Mikroskop gemäß einem vorhergehenden Anspruch,
wobei der erste Detektorabschnitt (26a) konfiguriert ist, um Licht von dem ersten übertragenen Lichtweg oder dem kongruenten zweiten reflektierten Lichtweg zu empfangen, und der zweite Detektorabschnitt (26b) konfiguriert ist, um Licht von dem zweiten übertragenen Lichtweg oder dem kongruenten ersten reflektierten Lichtweg zu empfangen.

4. Mikroskop gemäß einem vorhergehenden Anspruch,
wobei das Mikroskop ferner einen Bildprozessor (40) beinhaltet, der verbunden ist, um Bilddaten von dem Detektor (26) zu empfangen, und konfiguriert ist, um die reflektierten Bilddaten von den übertragenen Bilddaten zu subtrahieren, um konfokale Bilddaten für eines oder beide des ersten Objektivs (20) und des zweiten Objektivs (22) zu produzieren.

5. Mikroskop gemäß einem vorhergehenden Anspruch,

das ferner einen Blendenmechanismus (28a, 28b) zum Schalten zwischen dem ersten Objektiv (20) und dem zweiten Objektiv (22) beinhaltet.

6. Mikroskop gemäß einem vorhergehenden Anspruch,
   wobei die Lichtquelle (36) konfiguriert ist, um Licht über den Strahlteiler (33, 34) zu dem Probentisch (24) zum Beleuchten einer Probe (O), die auf dem Prpbentisch (24) befestigt ist, durch das erste Objektiv (20) und/oder das zweite Objektiv (22) zu leiten.

7. Mikroskop gemäß Anspruch 6, wobei Licht von der Lichtquelle (36), das durch den Strahlteiler (33, 34) läuft, entlang des ersten Lichtwegs (25a) an die Probe über das erste Objektiv (20) geleitet wird, und Licht von der Lichtquelle (36), das durch den Strahlteiler (33, 34) reflektiert wird, entlang des zweiten Lichtwegs (34b) an die Probe (O) über das zweite Objektiv (22) geleitet wird.

8. Mikroskop gemäß einem vorhergehenden Anspruch,
   wobei das erste Objektiv (20) entlang einer optischen z-Achse relativ zu dem Probentisch (24) bewegt werden kann und das Mikroskop eine z-Stapel-Steuerung beinhaltet, die konfiguriert ist, um das erste Objektiv (20) entlang der optischen z-Achse zu treiben und eine Reihe von Bilden zu erfassen, während das erste Objektiv (20) entlang einer optischen z-Achse getrieben wird, wobei die z-Stapel-Steuerung konfiguriert ist, um die Reihe von Bildern zu erfassen, während das erste Objektiv (20) in Bewegung ist, ohne zu erfordern, dass das erste Objektiv (20) gestoppt wird, während die Bilder erfasst werden.

9. Mikroskop gemäß einem vorhergehenden Anspruch,
   das ferner eine integrierte Datenspeicherenheit zum Speichern von Bilddaten beinhaltet.

10. Mikroskop gemäß einem vorhergehenden Anspruch,
    wobei der Probentisch (24) eine transparente Basis, auf der die Probe (O) befestigt werden kann, und einen Gleit-Schub-Mechanismus zum Schieben der Probe (O) um eine obere Oberfläche der transparenten Basis beinhaltet.

## Revendications

1. Un microscope comprenant :

   une platine porte-échantillon (24) pour monter un échantillon (O) ;
   une source de lumière (36) pour éclairer l'échantillon (O) lorsqu'il est monté sur la platine porte-échantillon (24) ;
   un détecteur (26) ;
   un premier objectif (20) disposé sur un côté de la platine porte-échantillon (24) ;
   un deuxième objectif (22) disposé sur un côté opposé de la platine porte-échantillon (24) ;
   un premier ensemble d'éléments optiques (28a, 30, 32, 33, 34) définissant un premier chemin de lumière (25a) du premier objectif (20) au détecteur (26) ;
   un deuxième ensemble d'éléments optiques (28b, 30, 32, 33, 34) définissant un deuxième chemin de lumière (25b) du deuxième objectif (22) au détecteur (26) ;
   dans lequel le premier objectif (20) et le deuxième objectif (22) ont un axe optique commun et sont configurés pour imager un échantillon (O) monté sur la platine porte-échantillon (24) dans un plan focal commun,
   dans lequel le premier objectif (20) est un objectif à fort grossissement et le deuxième objectif (22) est un objectif à faible grossissement ;
   le microscope comprenant en outre :

      un diviseur de faisceau (33) monté dans les premier (25a) et deuxième (25b) chemins de lumière, le diviseur de faisceau (33) comprenant un modulateur spatial de lumière (34) comprenant une pluralité de portions transmissives et non transmissives ;
      dans lequel les portions non transmissives du modulateur spatial de lumière (34) sont réfléchissantes,
      dans lequel le modulateur spatial de lumière (34) est configuré pour diviser le premier chemin de lumière (25a) en un premier chemin de lumière transmise et un premier chemin de lumière réfléchie, et pour diviser le deuxième chemin de lumière (25b) en un deuxième chemin de lumière transmise et un deuxième chemin de lumière réfléchie, et
      dans lequel le premier chemin de lumière transmise est congruent au deuxième chemin de lumière réfléchie, et le premier chemin de lumière réfléchie est congruent au deuxième chemin de lumière transmise ;
      dans lequel le détecteur (26) inclut une première portion de détecteur (26a) et une deuxième portion de détecteur (26b), la première portion de détecteur (26a) étant configurée pour recevoir de la lumière transmise et pour générer des données images transmises, et la deuxième portion de détecteur (26b) étant configurée pour recevoir de la lumière réfléchie et pour générer des données images réfléchies, ou la deuxième portion de détecteur (26b) étant configurée pour recevoir de la lumière transmise et pour générer des données images transmises, et la première portion de détecteur (26a) étant configurée pour recevoir de la lumière réfléchie et pour générer des données images réfléchies.

2. Un microscope selon la revendication 1, dans lequel le modulateur spatial de lumière comprend un masque rotatif comprenant une pluralité de portions transmissives et non transmissives.

3. Un microscope selon n'importe quelle revendication précédente, dans lequel la première portion de détecteur (26a) est configurée pour recevoir de la lumière en provenance du premier chemin de lumière transmise ou du deuxième chemin de lumière réfléchie congruent, et la deuxième portion de détecteur (26b) est configurée pour recevoir de la lumière en provenance du deuxième chemin de lumière transmise ou du premier chemin de lumière réfléchie congruent.

4. Un microscope selon n'importe quelle revendication précédente, le microscope comprenant en outre un processeur d'images (40) connecté de manière à recevoir des données images en provenance du détecteur (26) et configuré pour soustraire les données images réfléchies des données images transmises afin de produire des données images confocales pour l'un ou l'autre ou l'un et l'autre parmi le premier objectif (20) et le deuxième objectif (22).

5. Un microscope selon n'importe quelle revendication précédente, comprenant en outre un mécanisme d'obturateur (28a, 28b) pour permuter entre le premier objectif (20) et le deuxième objectif (22).

6. Un microscope selon n'importe quelle revendication précédente, dans lequel la source de lumière (36) est configurée pour diriger de la lumière via le diviseur de faisceau (33, 34) en direction de la platine porte-échantillon (24), pour éclairer un échantillon (O) monté sur la platine porte-échantillon (24) à travers le premier objectif (20) et/ou le deuxième objectif (22).

7. Un microscope selon la revendication 6, dans lequel de la lumière provenant de la source de lumière (36) passant à travers le diviseur de faisceau (33, 34) est dirigée le long du premier chemin de lumière (25a) vers l'échantillon via le premier objectif (20) et de la lumière provenant de la source de lumière (36) réfléchie par le diviseur de faisceau (33, 34) est dirigée le long du deuxième chemin de lumière (34b) vers l'échantillon (O) via le deuxième objectif (22).

8. Un microscope selon n'importe quelle revendication précédente, dans lequel le premier objectif (20) est déplaçable le long d'un axe z optique par rapport à la platine porte-échantillon (24) et le microscope comprend un organe de commande d'empilement en z (z-stack) qui est configuré pour entraîner le premier objectif (20) le long de l'axe z optique et capturer une série d'images à mesure que le premier objectif (20) est entraîné le long d'un axe z optique, l'organe de commande d'empilement en z étant configuré pour capturer la série d'images tandis que le premier objectif (20) est en mouvement sans nécessiter que le premier objectif (20) ne soit arrêté à mesure que les images sont capturées.

9. Un microscope selon n'importe quelle revendication précédente, comprenant en outre une unité de stockage de données intégrée pour stocker des données images.

10. Un microscope selon n'importe quelle revendication précédente, dans lequel la platine porte-échantillon (24) comprend une base transparente sur laquelle l'échantillon (O) peut être monté, et un mécanisme à glissement-poussée pour faire coulisser l'échantillon (O) autour d'une surface de dessus de la base transparente.

Fig. 1

Fig. 2

Low Magnification Transmitted Light Path
Low Magnification Reflected Light Path
High Magnification Transmitted Light Path
High Magnification Reflected Light Path

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 6144489 A
- US 6687052 B
- EP 158586 A1
- EP 3550353 A1